# EUROPÄISCHE PATENTSCHRIFT

(11) **EP 4 065 798 B1**
(45) Veröffentlichungstag und Bekanntmachung des Hinweises auf die Patenterteilung: **13.09.2023**
(21) Anmeldenummer: 20810882.9
(22) Anmeldetag: 17.11.2020
(51) Int. Cl.: E04H 12/10, F03D 13/20, E04H 12/00

(54) **GITTERSTRUKTUR FÜR EINEN TURM EINER WINDENERGIEANLAGE UND TURM EINER WINDENERGIEANLAGE**
LATTICE STRUCTURE FOR A TOWER OF A WIND TURBINE, AND TOWER OF A WIND TURBINE
STRUCTURE EN TREILLIS POUR UNE TOUR D'ÉOLIENNE, ET TOUR D'ÉOLIENNE

(30) Priorität: 27.11.2019 DE 102019218358
(43) Veröffentlichungstag der Anmeldung: 05.10.2022
(73) Patentinhaber: ThyssenKrupp Steel Europe AG, 47166 Duisburg (DE)
(72) Erfinder: KOTTKAMP, Klaus, 47167 Duisburg (DE); QAIMI, Siear, 42489 Wülfrath (DE); GALAL, Galal, 26603 Aurich (DE)
(74) Vertreter: ThyssenKrupp Steel Europe AG
(86) Internationale Anmeldenummer: PCT/EP2020/082345
(87) Internationale Veröffentlichungsnummer: WO 2021/104931

(56) Entgegenhaltungen:
- DE-A1-102012 007 425
- DE-A1-102014 114 472
- FR-A1- 2 993 291

## Beschreibung

### Technisches Gebiet (Technical Field)

Die Erfindung betrifft eine Gitterstruktur für einen Turm einer Windenergieanlage, umfassend:
- mindestens drei Eckstiele, welche in einem Winkel zur Vertikalen der Gitterstruktur zueinander geneigt sind, wobei die Eckstiele im unteren Teil der Gitterstruktur weiter voneinander beabstandet sind als im oberen Teil der Gitterstruktur, wobei jeder Eckstiel aus mehreren Längsstreben zusammengesetzt ist,
- mindestens eine Querstrebe, welche in einer horizontalen Ebene der Gitterstruktur zwischen zwei Eckstielen angeordnet ist und mit diesen verbunden ist, und/oder
- mindestens eine Diagonalstrebe, welche zwischen zwei horizontalen Ebenen der Gitterstruktur zwischen zwei Eckstielen angeordnet ist und mit diesen verbunden ist,
- mindestens drei Knotenelemente, welche in mindestens einer horizontalen Ebene der Gitterstruktur jeweils zwischen den die Eckstiele bildenden Längsstreben angeordnet sind und jeweils als Verbindungselement zwischen zwei Längsstreben, der mindestens einen Querstrebe und/oder der mindestens einen Diagonalstrebe fungieren.

Des Weiteren betrifft die Erfindung einen Turm einer Windenergieanlage.

### Technischer Hintergrund (Background Art)

Türme für Windenergieanlagen sind aus dem Stand der Technik bekannt. Entweder bestehen sie aus einer reinen Gitterstruktur, vgl. DE 10 2012 007 425 A1, oder aus einer Hybridstruktur beispielsweise im Offshore-Bereich, vgl. EP 2 067 914 A2, bzw. im Onshore-Bereich, vgl. DE 10 2012 106 772 A1, um beispielsweise hohe Türme mit großen Nabenhöhen realisieren zu können, um ausreichend Wind zur Energiegewinnung vorzufinden, so dass Windenergieanlagen insbesondere auch in Schwachwindgebieten wirtschaftlich betrieben werden können.

Eine gattungsgemäße Gitterkonstruktion ist aus der DE 10 2016 102 831 A1 bekannt.

Die Tragstruktur eines Turms respektive der Turm einer Windenergieanlage ist durch den unstetigen Wind und den damit verbundenen Windturbulenzen enormen dynamischen Kräften ausgesetzt, die einen erheblichen Einfluss auf die Ermüdungsfestigkeit und somit auf Lebensdauer solcher Strukturen haben. Insbesondere nehmen die Windturbulenzen mit zunehmender Höhe ab und wirken sich somit positiv auf das Ermüdungsverhalten und dadurch auf die Wirtschaftlichkeit der Gesamtanlage aus Turbine, Rotorblätter und Tragstruktur respektive Turm aus. Daher besteht hinsichtlich der Stand- und Betriebsfestigkeit Optimierungspotential.

### Zusammenfassung der Erfindung (Summary of Invention)

Der Erfindung liegt somit die Aufgabe zu Grunde, eine Gitterstruktur für einen Turm einer Windenergieanlage bereitzustellen, welche standsicher und betriebsfest insbesondere für Windenergieanlagen mit großer Nabenhöhe auslegbar und/oder wirtschaftlich herstellbar ist.

Gelöst wird diese Aufgabe gemäß einer ersten Lehre durch eine Gitterstruktur mit den Merkmalen des Patentanspruchs 1. Gelöst wird diese Aufgabe gemäß einer zweiten Lehre durch einen Turm mit den Merkmalen des Patentanspruchs 8.

Erfindungsgemäß weisen das Knotenelement in Längserstreckung an seinen Enden jeweils einen Flansch mit Durchgangsöffnungen und die zwei an ihren Enden mit dem Knotenelement zu verbindenden Längsstreben jeweils einen Flansch mit Durchgangsöffnungen auf, wobei Fügeelemente durch die oder in den Durchgangsöffnungen aufgenommen sind, über welche das Knotenelement mit den Längsstreben mechanisch verbunden ist.

Eine mechanische Verbindung zwischen den Knotenelementen und den die Eckstiele der Gitterstruktur bildenden Längsstreben ermöglicht eine schnelle und somit eine wirtschaftliche Errichtung einer Gitterstruktur auf einer Baustelle. Dadurch lassen sich im Vergleich zum Stand der Technik stoffschlüssige Verbindungen, dementsprechender Schweißaufwand, während der Errichtung der Gitterstruktur auf der Baustelle reduzieren. Im Vergleich zum Stand der Technik bedarf es nicht aufgrund der großen und unterschiedlichen Abmessungen der zu verbauenden Teile, der unterschiedlichen Teiledicken und der damit einhergehenden Vielzahl an unterschiedlichen Verbindungselementen zu aufwändigen und in der Praxis oft ungenauen Schweißnahtvorbereitungen, so dass es im Bereich der Schweißkerben zu hohen, unerwünschten Spannungskonzentrationen kommen kann. Eine Optimierung der komplexen Schweißnahtvorbereitungen, beispielsweise mittels 3-D-CNC-Maschinen, stellt große Herausforderungen aufgrund der Fertigungstoleranzen der eingesetzten Teile mit unterschiedlichen Teilegrößen dar. Um derart große (Bau-)Teile schweißtechnisch händeln zu können, bedarf es entsprechend großer Schweißvorrichtungen. Des Weiterhin können eventuell auftretende Schweißnahtimperfektionen aufgrund der großen, komplexen Abmessungen nicht im Vorfeld berechnungsseitig exakt berücksichtigt werden. Dieser Umstand führt wiederum zu Unsicherheiten bei der Abschätzung der Lebensdauer. Zudem kann aufgrund der Größe der Verbindungen und der langen Produktionszeiten insbesondere auf der Baustelle eine reproduzierbare Nahtqualität nicht zuverlässig gewährleistet werden. Diese Nachteile treten bei der erfindungsgemäßen Gitterstruktur nicht auf.

Durch die entsprechende Ausgestaltung und mechanische Verbindung zwischen dem bzw. den Knotenelement(en) und den Längsstreben, sowie die angebundenen Querstrebe(n) und/ oder Diagonalstrebe(n), insbesondere durch das Zusammenwirken aller Knotenelemente kann die Gitterstruktur für einen Turm einer Windenergieanlage optimal an die am Erstellungsort hohen dynamischen Belastungen, insbesondere auch für zyklische Betriebslasten ausgelegt werden. Dadurch sind Windenergieanlagen mit großer Nabenhöhe auslegbar und/oder wirtschaftlich herstellbar. Unter Nabenhöhe ist die Nabe des Windrotors der Windenergieanlage über der Geländeoberfläche (Aufstellungsort) zu verstehen.

Die Längsstrebe, die Querstrebe und die Diagonalstrebe können aus Profilen gebildet sein, entweder jeweils aus einem Hohlprofil oder aus einem Vollmaterial oder einer Kombination daraus bestehen. Der Querschnitt der Profile kann individuell ausgebildet sein. Die Längsstrebe hat insbesondere einen größeren Durchmesser im Vergleich zur Querstrebe und/oder Diagonalstrebe. Wird ein Hohlprofil verwendet, ist es beispielsweise ein längs- oder ein spiralnahtgeschweißtes Rohr. Besonders bevorzugt weisen Längsstrebe, Querstrebe und Diagonalstrebe einen kreisrunden Querschnitt auf. Weiter bevorzugt können die Profile standardisierte Profile sein, die kostengünstig herstellbar sind und dadurch je nach Ausgestaltung der Gitterstruktur individuell auf die gewünschte Länge zuschneidbar sind.

Jeder der mindestens drei Eckstiele ist aus mindestens zwei oder mehreren Längsstreben zusammengesetzt, wobei zwischen jeweils zwei Längsstreben erfindungsgemäß jeweils ein Knotenelement über Flansche mechanisch verbunden ist. Die Gitterstruktur kann genau drei Eckstiele aber auch mehr als drei Eckstiele aufweisen.

Unter unterem Teil der Gitterstruktur ist der boden- oder gründungsnahe Bereich der Gitterstruktur gemeint und unter oberem Teil der Gitterstruktur ist der gegenüberliegende und somit boden- oder gründungsferne Bereich der Gitterstruktur gemeint. Die Eckstiele sind in einem Winkel zur Vertikalen der Gitterstruktur zueinander geneigt, was bedeutet, dass sich die Gitterstruktur vom unteren zum oberen Teil der Gitterstruktur hin verjüngt.

Die Vertikale eines Gitterturms und die mindestens eine horizontale Ebene der Gitterstruktur beziehen sich auf den Zustand einer zusammengebauten respektive errichteten Gitterstruktur.

Je nach Ausgestaltung der Gitterstruktur kann mindestens eine Querstrebe vorhanden sein, welche in einer horizontalen Ebene der Gitterstruktur zwischen zwei Eckstielen angeordnet und mit diesen verbunden ist. Je nach Ausführung der Gitterstruktur kann alternativ oder zusätzlich mindestens eine Diagonalstrebe vorhanden sein, welche zwischen zwei horizontalen Ebenen der Gitterstruktur, welche in der Vertikalen der Gitterstruktur beabstandet voneinander vorgesehen sind, zwischen zwei Eckstielen angeordnet und mit diesen verbunden sein. Je nach Anzahl der Eckstiele können bei Bedarf auch die gleiche Anzahl an Querstreben verwendet werden, was bedeutet, dass bei drei Eckstielen auch drei Querstreben in jeweils einer horizontalen Ebene der Gitterstruktur jeweils zwischen den Eckstielen angeordnet und mit diesen verbunden sein können.

Die mindestens drei Knotenelemente sind in mindestens einer horizontalen Ebene der Gitterstruktur jeweils zwischen den die Eckstiele bildenden Längsstreben angeordnet und fungieren jeweils als Verbindungselement zwischen zwei Längsstreben, der mindestens einen Querstrebe und/oder der mindestens einen Diagonalstrebe. Je nach Anzahl der Eckstiele sind auch eine entsprechende Anzahl an Knotenelementen in mindestens einer horizontalen Ebene der Gitterstruktur vorgesehen. Je nach Ausgestaltung der Gitterstruktur können Knotenelemente in zwei oder mehr als zwei horizontale Ebenen der Gitterstruktur vorgesehen sein, wobei die Anzahl der Knotenelemente aus dem Produkt der Anzahl der horizontalen Ebenen und der Anzahl der Eckstiele bestimmt wird. Bedeutet beispielsweise, dass bei drei Eckstielen und drei horizontalen Ebenen insgesamt neun Knotenelemente benötigt werden, welche als Verbindungselemente für Längsstreben, Querstreben und/oder Diagonalstreben fungieren.

Unter Durchgangsöffnungen sind beispielsweise Bohrungen zu verstehen, welche eine Aufnahme und/oder ein Durchschieben von Fügeelementen ermöglichen.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausgestaltung der erfindungsgemäßen Gitterstruktur umfasst das Knotenelement mindestens ein radial nach außen verlaufendes Anbindungselement, welches zur Anbindung der mindestens einen Querstrebe und/oder der mindestens einen Diagonalstrebe fungiert. Je nach Ausgestaltung der Gitterstruktur erfolgt eine Anbindung mindestens einer Querstrebe bzw. ein Ende einer Querstrebe und/oder mindestens einer Diagonalstrebe bzw. ein Ende einer Diagonalstrebe über mindestens ein radial nach außen verlaufendes Anbindungselement am Knotenelement. Das Knotenelement kann zwei oder mehr als zwei radial nach außen verlaufende Anbindungselemente aufweisen, so dass mindestens eine Querstrebe bzw. ein Ende einer Querstrebe und mindestens eine Diagonalstrebe bzw. ein Ende einer Diagonalstrebe oder mindestens zwei Querstreben bzw. jeweils ein Ende der zwei Querstreben und/oder mindestens zwei Diagonalstreben bzw. jeweils ein Ende der zwei Diagonalstreben an das Knotenelement angebunden werden können.

Gemäß einer Ausgestaltung der erfindungsgemäßen Gitterstruktur weist das mindestens eine Anbindungselement einen Flansch mit Durchgangsöffnungen und die an ihrem Ende mit dem Knotenelement zu verbindende Querstrebe und/oder Diagonalstrebe jeweils einen Flansch mit Durchgangsöffnungen auf, wobei Fügeelemente durch die oder in den Durchgangsöffnungen aufgenommen sind, über welche das Knotenelement mit der Querstrebe und/oder Diagonalstrebe mechanisch verbunden ist. Dies ist insbesondere vorteilhaft, da die Errichtung der Gitterstruktur zum größten Teil über mechanische Verbindungen zwischen den einzelnen Komponenten (Längsstreben, Querstreben, Diagonalstreben, Knotenelemente) schnell und somit wirtschaftlich vor Ort ermöglicht wird. Dadurch kann die Errichtung der Gitterstruktur durch den Zusammenbau der einzelnen Komponenten auch einfacher Art und Weise in der Vertikalen vonstattengehen, wodurch gegenüber einem liegenden horizontalen Zusammenbau, bedingt durch zum größten Teil stoffschlüssig zu verbindende Komponenten und somit verbunden einem erhöhten Schweißaufwand auf der Baustelle, insbesondere kein Schwerlastkran zum Aufrichten benötigt wird.

Das Knotenelement ist aus mehreren Teilen gefertigt, wobei ein Teil einstückig in Form einer Teilschale gefertigt ist und dieses mindestens ein radial nach außen verlaufendes Anbindungselement umfasst. Vorzugsweise besteht diese Teilschale aus einem Gussteil oder Schmiedeteil. Des Weiteren können einstückige Teile individuell skalierbar sein. Dies kann insbesondere vorteilhaft sein, um die Herstellung des Knotenelements und damit verbunden auch die Herstellung der Gitterstruktur möglichst effizient und kostengünstig, vorzugsweise in Serie unter Sicherstellung einer möglichst hohen gleichbleibenden Qualität zu ermöglichen.

Erfindungsgemäß ist das Knotenelement aus mehreren Teilen gefertigt, wobei ein Teil einstückig in Form einer Teilschale (erste Teilschale) gefertigt ist und ein mindestens radial nach außen verlaufendes Anbindungselement umfasst, wobei die Teilschale zwei Längskanten umfasst, über welche mindestens ein weiteres Teil in Form einer Teilschale (zweite Teilschale) mit zwei Längskanten stoffschlüssig verbunden ist, wobei die beiden Teilschalen im verbundenen Zustand ein Hohlprofil bilden. Vorzugsweise besteht die (erste) Teilschale aus einem Gussteil oder Schmiedeteil. Dadurch kann eine (erste) Teilschale insbesondere effizient und kostengünstig, vorzugsweise in Serie mit einer hohen gleichbleibenden Qualität hergestellt werden. Des Weiteren können einstückige Teile individuell skalierbar sein. Bevorzugt besteht die (zweite) Teilschale aus einem gewalzten und insbesondere geformten Blech. Gewalzte Bleche sind in allen möglichen Dicken verfügbar und lassen sich kostengünstig zu Teilschalen formen. Weiter bevorzugt besteht das gewalzte Blech aus einem Stahlwerkstoff. Besonders bevorzugt ist das Knotenelement als Guss-Blech-Schweißelement oder Schmiede-Blech-Schweißelement ausgeführt. Die erste Teilschale kann in ihrer Längserstreckung je nach Anordnung des oder der radial nach außen verlaufenden Anbindungselemente insbesondere jeweils an ihren Enden einen Querschnitt aufweisen, welcher maximal ein ¾-Bogenmaß eines kreisrunden Querschnitts, insbesondere maximal ein ½-Bogenmaß eines kreisrunden Querschnitts, vorzugsweise maximal ein 1/3-Bogenmaß eines kreisrunden Querschnitts einnehmen kann. Durch die stoffschlüssige Verbindung mit der zweiten Teilschale wird der kreisrunde Querschnitt an den jeweiligen Enden komplettiert. Bevorzugt weist die zweite Teilschale an ihren Enden ein größeres Bogenmaß als die erste Teilschale auf.

Insbesondere ist die einstückige Herstellung eines Teils des Knotenelements gut und mit hoher, gleichbleibender Qualität, insbesondere in Serie reproduzierbar. Neben Guss oder Schmieden ist auch die Verwendung eines faserverstärkten Kunststoffs (Glasfaser, Kohlenstofffaser) zur Herstellung eines Teils oder des im Wesentlichen vollständigen Knotenelements möglich, welches in geeigneten Vorrichtungen beispielsweise im RTM-Verfahren herstellbar ist.

Das beispielsweise aus mindestens zwei Teilschalen zusammengesetzte Knotenelement hat insbesondere den Vorteil, dass das mindestens eine radial nach außen verlaufende Anbindungselement einstückig mit der ersten Teilschale gefertigt ist, vorzugsweise als Gussteil ausgeführt ist und damit eine besonders stabile und steife Anbindung der Querstrebe(n) und/oder Diagonalstrebe(n) ermöglicht und die zweite Teilschale aus einem gewalzten und insbesondere geformten Blech das Knotenelement mit einem relativ günstigen und formtechnisch relativ einfach herstellbaren Werkstoff komplettiert, wobei die beiden Teilschalen jeweils über ihre zwei Längskanten stoffschlüssig verbunden sind und dadurch ein Hohlprofil bilden. Durch die stoffschlüssige Verbindung insbesondere in Form jeweils einer Längsschweißnaht, werden größere Rundungsradien in den Spannungs-Hot-Spot Bereichen ermöglicht. Dadurch können Bereiche und/oder Zonen, beispielsweise Ecken und/oder Kanten, in denen sich die Spannungen konzentrieren, demnach hohe Spannungszustände und/oder -spitzen auftreten können, durch möglichst gleichmäßig verlaufende (Aus-)Rundungen Spannungen reduziert werden, was sich positiv auf die Lebensdauer auswirken kann. Des Weiteren können dadurch an den Spannungs-Hot-Spot-Bereichen höhere Kerbfallklassen erzielt werden, wobei der Kerbfall die zulässige Spannung beschreibt, die unter Betriebslasten nicht überschritten werden darf, quasi dadurch höhere Ermüdungsfestigkeiten erzielt werden können, was sich wiederum positiv auf die Kosten auswirken kann. Insbesondere kann die Längsschweißnaht bzw. können die Längsschweißnähte entlang des Kraftflusses zu einer hohen Dauerfestigkeit beitragen und darüber hinaus ebenfalls zu einer höheren Kerbfallklasse führen.

Gemäß einer Ausgestaltung der erfindungsgemäßen Gitterstruktur ist mindestens ein radial nach außen verlaufendes Anbindungselement als separates Teil stoffschlüssig mit dem Knotenelement verbunden. Toleranzbedingt kann auftreten, dass insbesondere nicht alle radial nach außen verlaufenden Anbindungselemente vorzugsweise einstückig mit einem Teil des Knotenelements oder des im Wesentlichen vollständigen Knotenelements herstellbar sind, so dass das mindestens eine radial nach außen verlaufende Anbindungselement als separates Teil individuell an die Einbausituation stoffschlüssig an das Knotenelement verbindbar ist. Dadurch würde sich der Aufwand des Zusammenbaus zwar geringfügig erhöhen, bliebe dennoch im Rahmen und es könnte auf die Einbausituation korrigierend eingewirkt werden. Des Weiteren können dadurch, wenn beispielsweise kein symmetrischer Aufbau in der Gitterstruktur umgesetzt wird, insbesondere in mindestens einer horizontalen Ebene der Gitterstruktur mindestens zwei unterschiedliche Knotenelemente berücksichtigt werden, die sich lediglich in der Anordnung des mindestens einen radial nach außen verlaufenden Anbindungselements unterscheiden, welches als separates Teil ausgeführt ist, so dass das Knotenelement oder Teile des Knotenelements als Gleichteil(e) in einer Serienfertigung, insbesondere als Massenprodukt, kostengünstig und gleichzeitig mit einer Qualität auf einem gleichbleibend hohen Niveau hergestellt werden kann. Je nach Ausgestaltung der Gitterstruktur können durch die Individualisierung respektive die Skalierung der Knotenelemente unterschiedliche Klassen von Windturbinen und unterschiedliche Nabenhöhen realisiert werden.

Gemäß einer Ausgestaltung der erfindungsgemäßen Gitterstruktur ist der mindestens eine Flansch als separates Teil an einer korrespondierenden Stirnkante des Knotenelements stoffschlüssig verbunden. Alternativ zu einer Ausführung, welche einen Flansch oder mehrere Flansche einstückig mit dem einen oder mehreren radial nach außen verlaufenden Anbindungselement(en) umfasst, können durch die separaten Flansch(teile) einfach und kostengünstig hergestellt werden. Beispielsweise ist der separate Flansch gegossen.

Gemäß einem zweiten Aspekt betrifft die Erfindung einen Turm einer Windenergieanlage mit einem Oberteil in Form eines zylindrischen Rohrturms, einem Unterteil in Form einer erfindungsgemäßen Gitterstruktur und einem Mittelteil, welches das Oberteil mit dem Unterteil verbindet. Das Mittelteil fungiert als Übergangsstück zwischen Unter- und Oberteil des Turms einer Windenergieanlage.

Um Wiederholungen zu vermeiden, wird auf die vorteilhaften Ausgestaltungen der erfindungsgemäßen Gitterstruktur verwiesen.

### Kurze Beschreibung der Zeichnungen (Brief Description of Drawings)

Im Folgenden wird die Erfindung anhand von Zeichnungen näher erläutert. Gleiche Teile sind mit gleichen Bezugszeichen versehen. Im Einzelnen zeigen:
- Fig. 1: eine schematische, perspektivische Darstellung einzelner Teile zur Erzeugung eines Knotenelements zu einem ersten Zeitpunkt,
- Fig. 2: eine schematische, perspektivische Darstellung eines noch nicht vollständig erzeugten Knotenelements zu einem zweiten Zeitpunkt,
- Fig. 3: eine schematische, perspektivische Darstellung eines Knotenelements und
- Fig. 4: eine schematische, perspektivische Darstellung einer Gitterstruktur gemäß einer Ausführung der Erfindung.

### Beschreibung der bevorzugten Ausführungsformen (Best Mode for Carrying out the Invention)

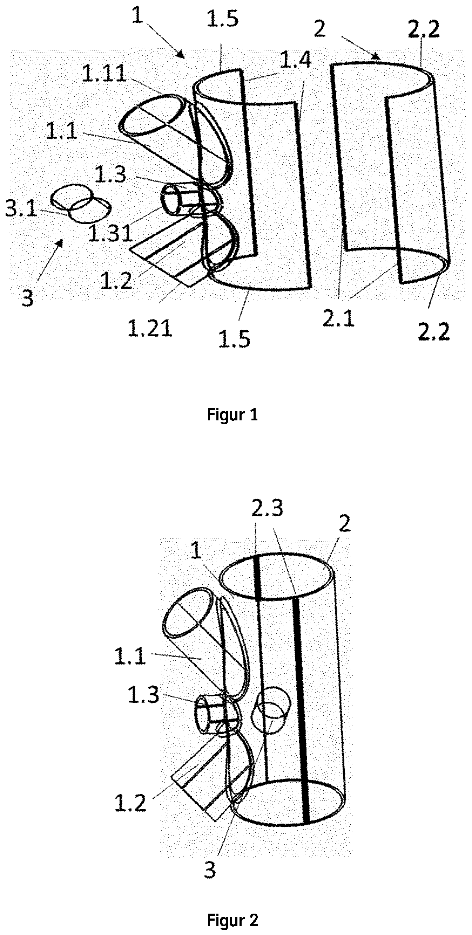

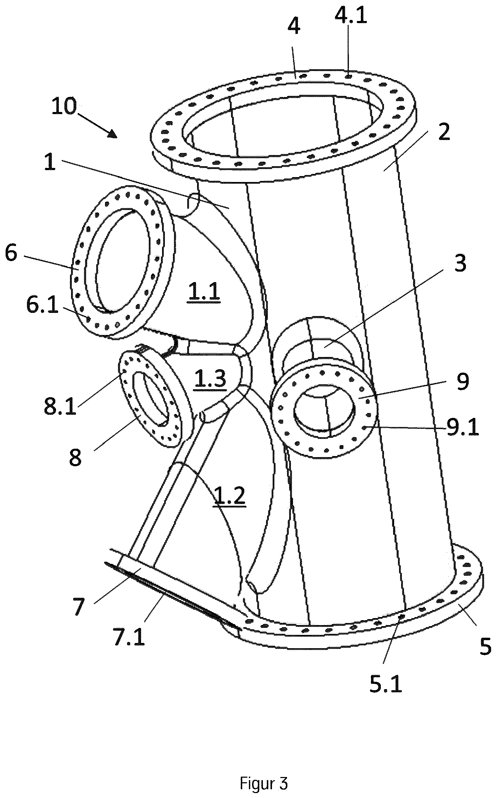

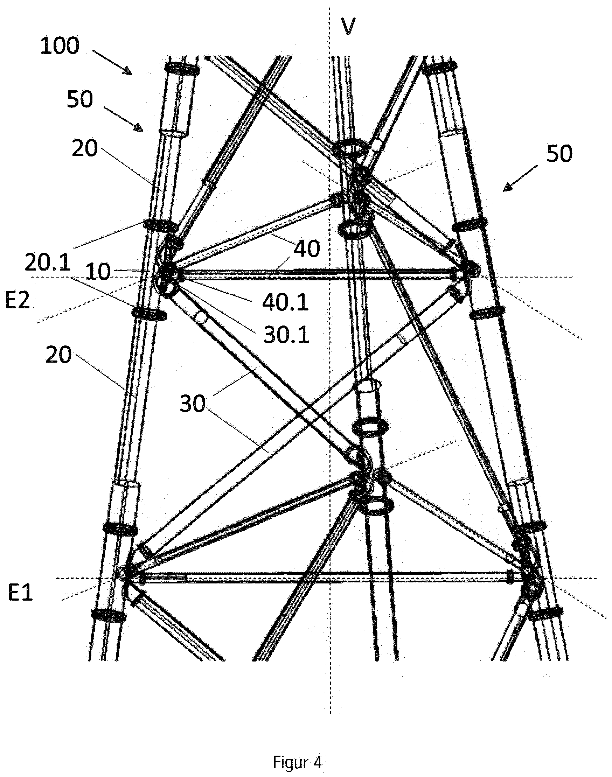

In **Figur 1** ist eine schematische, perspektivische Darstellung respektive eine Explosionsdarstellung einzelner Teile (1, 2, 3) zur Erzeugung eines Knotenelements (10) zu einem ersten Zeitpunkt gezeigt. Das zu erzeugende Knotenelement (10) ist aus mehreren Teilen (1, 2, 3) gefertigt, wobei ein Teil (1) einstückig in Form einer Teilschale gefertigt ist und mindestens ein radial nach außen verlaufendes Anbindungselement (1.1, 1.2, 1.3, 3) umfasst, wobei das mindestens eine radial nach außen verlaufende Anbindungselement (1.1, 1.2, 1.3) einstückig mit der Teilschale (1) gefertigt ist. Die Teilschale (1) besteht aus einem Schmiedeteil oder vorzugsweise aus einem Gussteil. Zwischen den radial nach außen verlaufenden Anbindungselementen (1.1, 1.2), welche in ihrer Erstreckung schräg nach unten und schräg nach oben verlaufen, ist ein weiteres radial nach außen verlaufendes Anbindungselement (1.3) einstückig vorgesehen, welches sich quer zur Teilschale (1) erstreckt. Des Weiteren wird mindestens ein radial nach außen verlaufendes Anbindungselement (3) als separates Teil bereitgestellt, welches stoffschlüssig mit dem Knotenelement (10) verbunden ist, vgl. **Figur 2****.** Die Anbindungselemente (1.1, 1.2, 1.3, 3) weisen jeweils eine Stirnkante (1.11, 1.21, 1.31, 3.1) zum stoffschlüssigen Verbinden mit jeweils einem Flansch (6, 7, 8, 9) als separates Teil auf, vgl. **Figur 3****.** Als weiteres Teil dient die Teilschale (2), welche aus einem gewalzten und insbesondere geformten Blech besteht. Die Dimensionierung der Teilschalen (1, 2) und der Anbindungselemente (1.1, 1.2, 1.3, 3) respektive deren Durchmesser und Dicke ist abhängig von der Ausgestaltung der zu erstellenden Gitterstruktur (100), vgl. **Figur 4****.**

In **Figur 2** ist eine schematische, perspektivische Darstellung eines noch nicht vollständig erzeugten Knotenelements (10) zu einem zweiten Zeitpunkt gezeigt, wobei über die zwei Längskanten (1.4) der Teilschale (1) und der zwei Längskanten (2.1) der Teilschale (2) eine stoffschlüssige Verbindung erfolgt ist, welche insbesondere jeweils als Längsschweißnähte (2.3) ausgeführt sind, so dass die beiden Teilschalen (1, 2) im verbundenen Zustand ein Hohlprofil bilden. Des Weiteren ist mindestens ein radial nach außen verlaufendes Anbindungselement (3) als separates Teil stoffschlüssig mit dem Knotenelement (10) verbunden.

In **Figur 3** ist eine schematische, perspektivische Darstellung eines Knotenelements (10) gezeigt. Das Knotenelement (10) weist in Längserstreckung an seinen Enden jeweils einen Flansch (4, 5) mit Durchgangsöffnungen (4.1, 5.1) auf, welche als separate Teile an den Stirnkanten (1.5, 2.2) des Knotenelements (10) stoffschlüssig verbunden sind. Auch die Anbindungselemente (1.1, 1.2, 1.3, 3) weisen Flansche (6, 7, 8, 9) mit Durchgangsöffnungen (6.1, 7.1, 8.1, 9.1) auf, welche als separate Teile an korrespondierenden Stirnkanten (1.11, 1.21, 1.31, 3.1) des Knotenelements (10) respektive der Anbindungselemente (1.1, 1.2, 1.3, 3) stoffschlüssig verbunden sind. Das Knotenelement (10) ist als Schmiede-Blech-Schweißelement oder bevorzugt als Guss-Blech-Schweißelement ausgeführt. Denkbar ist auch, dass das Knotenelement (10) inklusive aller Flansche (4, 5, 6, 7, 8) mit Ausnahme mindestens eines radial nach außen verlaufenden Anbindungselements (3) und des Flansches (9) als gesonderte, verbindbare Teile vollständig entweder aus Guss oder aus einem faserverstärkten Kunststoff gefertigt ist.

Die Anbindungselemente (1.1, 1.2) sind zur Anbindung von Diagonalstreben (30) respektive eines ihrer Enden und die Anbindungselemente (1.3, 3) zur Anbindung der Querstreben (40) respektive eines ihrer Enden ausgelegt.

In **Figur 4** ist eine schematische, perspektivische Darstellung einer Gitterstruktur (100) für einen Turm einer nicht dargestellten Windenergieanlage gemäß einer Ausführung der Erfindung gezeigt. Die Gitterstruktur für einen Turm einer nicht dargestellten Windenergieanlage umfasst mindestens drei Eckstiele (50), welche in einem Winkel zur Vertikalen (V) der Gitterstruktur (100) zueinander geneigt sind, wobei die Eckstiele (50) im unteren Teil der Gitterstruktur (100) weiter voneinander beabstandet sind als im oberen Teil der Gitterstruktur (100), wobei jeder Eckstiel (50) aus mehreren Längsstreben (20) zusammengesetzt ist. Des Weiteren umfasst die Gitterstruktur mindestens eine Querstrebe (40), welche in einer horizontalen Ebene (E1, E2) der Gitterstruktur (100) zwischen zwei Eckstielen (50) angeordnet und mit diesen verbunden ist. Die unterschiedlichen Ebenen (E1, E2) sind jeweils durch die Strichlinien symbolisiert. Des Weiteren umfasst die Gitterstruktur (100) mindestens eine Diagonalstrebe (30), welche zwischen zwei horizontalen Ebenen (E1, E2) der Gitterstruktur (100) zwischen zwei Eckstielen (50) angeordnet und mit diesen verbunden ist. Ferner umfasst die Gitterstruktur (100) mindestens drei Knotenelemente (10), welche in mindestens einer horizontalen Ebene (E1, E2) der Gitterstruktur (100) jeweils zwischen den die Eckstiele (50) bildenden Längsstreben (20) angeordnet sind und jeweils als Verbindungselement zwischen zwei Längsstreben (20), der mindestens einen Querstrebe (40) und der mindestens einen Diagonalstrebe (30) fungieren.

Auch die zwei an ihren Enden mit dem Knotenelement (10) zu verbindenden Längsstreben (20) weisen jeweils einen Flansch (20.1) mit Durchgangsöffnungen auf, wobei nicht dargestellte Fügeelemente, beispielsweise Schrauben-Mutter-Verbindungen, durch die oder in den Durchgangsöffnungen (4.1, 5.1) aufgenommen sind, über welche das Knotenelement (10) mit den Längsstreben (20) mechanisch verbunden ist.

Des Weiteren weisen auch die an ihrem Ende mit dem Knotenelement (10) zu verbindende Querstrebe (40) und Diagonalstrebe (3) jeweils einen Flansch (30.1, 40.1) mit Durchgangsöffnungen auf, wobei nicht dargestellte Fügeelemente, beispielsweise Schrauben-Mutter-Verbindungen, durch die oder in den Durchgangsöffnungen (6.1, 7.1, 8.1, 9.1) aufgenommen sind, über welche das Knotenelement (10) mit der Querstrebe (40) und der Diagonalstrebe (30) mechanisch verbunden ist. Denkbar ist auch, dass abhängig von der Ausgestaltung der Gitterstruktur auch nur Querstreben oder nur Diagonalstreben vorgesehen sind, so dass die Knotenelemente entsprechende auf den Bedarfsfall angepasste nach radial nach außen verlaufende Anbindungselemente berücksichtigen, nicht dargestellt.

Der nicht dargestellte Turm einer nicht dargestellten Windenergieanlage kann ein Oberteil in Form eines zylindrischen Rohrturms, ein Unterteil in Form einer Gitterstruktur (100) nach einer erfindungsgemäßen Ausführung und einen Mittelteil umfassen, wobei das Mitteilteil das Oberteil mit dem Unterteil (100) verbindet.

Der nicht dargestellte Turm einer nicht dargestellten Windenergieanlage kann für den Onshore- oder Offshore-Bereich ausgelegt sein.

Die beschriebenen Merkmale sind alle, soweit technisch möglich, miteinander kombinierbar.

## Patentansprüche

1. Gitterstruktur (100) für einen Turm einer Windenergieanlage, umfassend
- mindestens drei Eckstiele (50), welche in einem Winkel zur Vertikalen (V) der Gitterstruktur (100) zueinander geneigt sind, wobei die Eckstiele (50) im unteren Teil der Gitterstruktur (100) weiter voneinander beabstandet sind als im oberen Teil der Gitterstruktur (100), wobei jeder Eckstiel (50) aus mehreren Längsstreben (20) zusammengesetzt ist,
- mindestens eine Querstrebe (40), welche in einer horizontalen Ebene (E1, E2) der Gitterstruktur (100) zwischen zwei Eckstielen (50) angeordnet ist und mit diesen verbunden ist, und/oder
- mindestens eine Diagonalstrebe (30), welche zwischen zwei horizontalen Ebenen (E1, E2) der Gitterstruktur (100) zwischen zwei Eckstielen (50) angeordnet ist und mit diesen verbunden ist,
- mindestens drei Knotenelemente (10), welche in mindestens einer horizontalen Ebene (E1, E2) der Gitterstruktur (100) jeweils zwischen den die Eckstiele (50) bildenden Längsstreben (20) angeordnet sind und jeweils als Verbindungselement zwischen zwei Längsstreben (20), der mindestens einen Querstrebe (40) und/oder der mindestens einen Diagonalstrebe (30) fungieren,
**dadurch gekennzeichnet, dass** das Knotenelement (10) in Längserstreckung an seinen Enden jeweils einen Flansch (4, 5) mit Durchgangsöffnungen (4.1, 5.1) und die zwei an ihren Enden mit dem Knotenelement (10) zu verbindenden Längsstreben (20) jeweils einen Flansch (20.1) mit Durchgangsöffnungen aufweisen, wobei Fügeelemente durch die oder in den Durchgangsöffnungen (4.1, 5.1) aufgenommen sind, über welche das Knotenelement (10) mit den Längsstreben (20) mechanisch verbunden ist, wobei das Knotenelement (10) aus mehreren Teilen (1, 2, 3) gefertigt ist, wobei ein Teil (1) einstückig in Form einer Teilschale gefertigt ist und mindestens ein radial nach außen verlaufendes Anbindungselement (1.1, 1.2, 1.3) umfasst, wobei die Teilschale (1) zwei Längskanten (1.4) umfasst über welche mindestens ein weiteres Teil (2) in Form einer Teilschale mit zwei Längskanten (2.1) stoffschlüssig verbunden ist, wobei die beiden Teilschalen (1, 2) im verbundenen Zustand ein Hohlprofil bilden.

2. Gitterstruktur nach Anspruch 1, wobei das radial nach außen verlaufende Anbindungselement (1.1, 1.2, 1.3, 3) zur Anbindung der mindestens einen Querstrebe (40) und/oder der mindestens einen Diagonalstrebe (30) fungiert.

3. Gitterstruktur nach Anspruch 2, wobei das Anbindungselement (1.1, 1.2, 1.3, 3) einen Flansch (6, 7, 8, 9) mit Durchgangsöffnungen (6.1, 7.1, 8.1, 9.1) und die an ihrem Ende mit dem Knotenelement (10) zu verbindende Querstrebe (40) und/oder Diagonalstrebe (3) jeweils einen Flansch (30.1, 40.1) mit Durchgangsöffnungen aufweisen, wobei Fügeelemente durch die oder in den Durchgangsöffnungen (6.1, 7.1, 8.1, 9.1) aufgenommen sind, über welche das Knotenelement (10) mit der Querstrebe (40) und/oder Diagonalstrebe (30) mechanisch verbunden ist.

4. Gitterstruktur nach Anspruch 1, wobei die Teilschale (1) aus einem Gussteil oder Schmiedeteil besteht.

5. Gitterstruktur nach Anspruch 1, wobei die Teilschale (2) aus einem gewalzten und insbesondere geformten Blech besteht.

6. Gitterstruktur nach einem der vorgenannten Ansprüche, wobei mindestens ein radial nach außen verlaufendes Anbindungselement (3) als separates Teil stoffschlüssig mit dem Knotenelement (10) verbunden ist.

7. Gitterstruktur nach einem der vorgenannten Ansprüche, wobei der mindestens eine Flansch (4, 5, 6, 7, 8, 9) als separates Teil an einer korrespondierenden Stirnkante (1.11, 1.21, 1.31, 1.5, 2.2, 3.1) des Knotenelements (10) stoffschlüssig verbunden ist.

8. Turm einer Windenergieanlage mit einem Oberteil in Form eines zylindrischen Rohrturms, einem Unterteil in Form einer Gitterstruktur (100) nach einem der vorgenannten Ansprüche und einem Mittelteil, welches das Oberteil mit dem Unterteil (100) verbindet.

## Claims

1. Lattice structure (100) for a tower of a wind power installation, comprising
- at least three corner posts (50) which are mutually inclined at an angle in relation to the vertical (V) of the lattice structure (100), wherein the corner posts (50) in the lower part of the lattice structure (100) are further spaced apart from one another than in the upper part of the lattice structure (100), wherein each corner post (50) is assembled from a plurality of longitudinal struts (20),
- at least one cross strut (40) which is disposed in a horizontal plane (E1, E2) of the lattice structure (100) between two corner posts (50) and is connected to the latter, and/or
- at least one diagonal strut (30) which is disposed between two horizontal planes (E1, E2) of the lattice structure (100) between two corner posts (50) and is connected to the latter,
- at least three node elements (10) which are disposed in at least one horizontal plane (E1, E2) of the lattice structure (100), in each case between the longitudinal struts (20) forming the corner posts (50), and in each case function as a connecting element between two longitudinal struts (20), the at least one cross strut (40), and/or at least one diagonal strut (30),
**characterized in that** the node element (10) in the longitudinal extent on the ends thereof has in each case one flange (4, 5) with passage openings (4.1, 5.1), and the two longitudinal struts (20) which at the ends thereof are to be connected to the node element (10) have in each case one flange (20.1) with passage openings, wherein joining element by way of which the node element (10) is mechanically connected to the longitudinal struts (20) are received by way of or in the passage openings (4.1, 5.1), wherein the node element (10) is manufactured from a plurality of parts (1, 2, 3), wherein one part (1) is integrally manufactured in the form of a shell part and comprises at least one attachment element (1.1, 1.2, 1.3) which runs radially outwards, wherein the shell part (1) comprises two longitudinal edges (1.4) by way of which at least one further part (2) in the form of a shell part having two longitudinal edges (2.1) is connected in a materially integral manner, wherein the two shell parts (1, 2) in the connected state form a hollow section.

2. Lattice structure according to Claim 1, wherein the attachment element (1.1, 1.2, 1.3, 3) which runs radially outwards serves for attaching the at least one cross strut (40) and/or the at least one diagonal strut (30).

3. Lattice structure according to Claim 2, wherein the attachment element (1.1, 1.2, 1.3, 3) has a flange (6, 7, 8, 9) with passage openings (6.1, 7.1, 8.1, 9.1), and the cross strut (40) and/or diagonal strut (30) which at the end thereof are to be connected to the node element (10) have in each case one flange (30.1, 40.1) with passage openings, wherein joining elements by way of which the node element (10) is mechanically connected to the cross strut (40) and/or diagonal strut (30) are received by way of or in the passages openings (6.1, 7.1, 8.1, 9.1).

4. Lattice structure according to Claim 1, wherein the shell part (1) is composed of a casting or a forging.

5. Lattice structure according to Claim 1, wherein the shell part (1) is composed of a rolled and in particular formed metal sheet.

6. Lattice structure according to one of the preceding claims, wherein at least one attachment element (3) which runs radially outwards as a separate part is connected to the node element (10) in a materially integral manner.

7. Lattice structure according to one of the preceding claims, wherein the at least one flange (4, 5, 6, 7, 8, 9) as a separate part is connected in a materially integral manner on a corresponding leading edge (1.11, 1.21, 1.31, 1.5, 2.2, 3.1) of the node element (10).

8. Tower of a wind power installation having an upper part in the form of a cylindrical tubular tower, a lower part in the form of a lattice structure (100) according to one of the preceding claims, and a central part which connects the upper part to the lower part (100).

## Revendications

1. Structure en treillis (100) pour une tour d'une éolienne, comprenant
- au moins trois montants d'angle (50) qui sont inclinés les uns par rapport aux autres selon un angle par rapport à la verticale (V) de la structure en treillis (100), les montants d'angle (50) étant plus espacés les uns des autres dans la partie inférieure de la structure en treillis (100) que dans la partie supérieure de la structure en treillis (100), chaque montant d'angle (50) étant composé de plusieurs entretoises longitudinales (20),
- au moins une entretoise transversale (40), qui est agencée dans un plan horizontal (E1, E2) de la structure en treillis (100) entre deux montants d'angle (50) et qui est reliée à ceux-ci, et/ou
- au moins une entretoise diagonale (30), qui est agencée entre deux plans horizontaux (E1, E2) de la structure en treillis (100) entre deux montants d'angle (50) et qui est reliée à ceux-ci,
- au moins trois éléments nodaux (10), qui sont agencés dans au moins un plan horizontal (E1, E2) de la structure en treillis (100), respectivement entre les entretoises longitudinales (20) formant les montants d'angle (50), et qui servent respectivement d'élément de liaison entre deux entretoises longitudinales (20), l'au moins une entretoise transversale (40) et/ou l'au moins une entretoise diagonale (30),
**caractérisée en ce que** l'élément nodal (10) présente à chacune de ses extrémités, dans l'extension longitudinale, une bride (4, 5) avec des ouvertures de passage (4.1, 5.1) et les deux entretoises longitudinales (20) à relier à leurs extrémités à l'élément nodal (10) présentent chacune une bride (20.1) avec des ouvertures de passage, des éléments de joint étant reçus par les ou dans les ouvertures de passage (4.1, 5.1), par l'intermédiaire desquels l'élément nodal (10) est relié mécaniquement aux entretoises longitudinales (20), l'élément nodal (10) étant fabriqué en plusieurs parties (1, 2, 3), une partie (1) étant fabriquée en une seule pièce sous la forme d'une coque partielle et comprenant au moins un élément de liaison (1.1, 1.2, 1.3) s'étendant radialement vers l'extérieur, la coque partielle (1) comprenant deux arêtes longitudinales (1.4) par l'intermédiaire desquelles au moins une autre partie (2) sous la forme d'une coque partielle avec deux arêtes longitudinales (2.1) est reliée par liaison de matière, les deux coques partielles (1, 2) formant un profilé creux à l'état relié.

2. Structure en treillis selon la revendication 1, dans laquelle le l'élément de liaison (1.1, 1.2, 1.3, 3) s'étendant radialement vers l'extérieur sert à relier l'au moins une entretoise transversale (40) et/ou l'au moins une entretoise diagonale (30).

3. Structure en treillis selon la revendication 2, dans laquelle l'élément de liaison (1.1, 1.2, 1.3, 3) présente une bride (6, 7, 8, 9) avec des ouvertures de passage (6.1, 7.1, 8.1, 9.1) et l'entretoise transversale (40) et/ou l'entretoise diagonale (3) à relier à son extrémité à l'élément nodal (10) présente respectivement une bride (30.1, 40.1) avec des ouvertures de passage, des éléments de joint étant reçus par les ou dans les ouvertures de passage (6.1, 7.1, 8.1, 9.1), par l'intermédiaire desquels l'élément nodal (10) est relié mécaniquement à l'entretoise transversale (40) et/ou à l'entretoise diagonale (30).

4. Structure en treillis selon la revendication 1, dans laquelle la coque partielle (1) est constituée d'une pièce coulée ou d'une pièce forgée.

5. Structure en treillis selon la revendication 1, dans laquelle la coque partielle (2) est constituée d'une tôle laminée et notamment formée.

6. Structure en treillis selon l'une quelconque des revendications précédentes, dans laquelle au moins un élément de liaison (3) s'étendant radialement vers l'extérieur est relié à l'élément nodal (10) par liaison de matière en tant que pièce séparée.

7. Structure en treillis selon l'une quelconque des revendications précédentes, dans laquelle l'au moins une bride (4, 5, 6, 7, 8, 9) est reliée, en tant que pièce séparée, à une arête frontale correspondante (1.11, 1.21, 1.31, 1.5, 2.2, 3.1) de l'élément nodal (10) par liaison de matière.

8. Tour d'une éolienne avec une partie supérieure sous la forme d'une tour tubulaire cylindrique, une partie inférieure sous la forme d'une structure en treillis (100) selon l'une quelconque des revendications précédentes et une partie centrale qui relie la partie supérieure à la partie inférieure (100).
